(19) Europäisches Patentamt
European Patent Office
Office européen des brevets

(11) EP 2 072 280 B1

(12) # EUROPEAN PATENT SPECIFICATION

(45) Date of publication and mention of the grant of the patent:
**02.05.2012 Bulletin 2012/18**

(21) Application number: **08021672.4**

(22) Date of filing: **12.12.2008**

(51) Int Cl.:
***B60C 17/00*** *(2006.01)*
*C08L 7/00* *(2006.01)*
*C08L 9/06* *(2006.01)*
*C08L 61/04* *(2006.01)*
***C08L 21/00*** *(2006.01)*
*C08K 5/3492* *(2006.01)*
*C08L 15/00* *(2006.01)*

(54) **Rubber composition for topping a case and/or breaker used for run-flat tire and run-flat tire using the same**

Gummimischung zur Beschichtung eines für einen Notlaufreifen verwendeten Verstärkungsgürtels und Notlaufreifen damit

Composition de caoutchouc pou remplir une caesse et/ou bandage pneumatique utilisé pour pneu à flancs renforcés et pneu à flancs renforcés l'utilisant

(84) Designated Contracting States:
**DE**

(30) Priority: **18.12.2007 JP 2007325545**

(43) Date of publication of application:
**24.06.2009 Bulletin 2009/26**

(73) Proprietor: **Sumitomo Rubber Industries, Ltd.**
**Kobe-shi,**
**Hyogo-ken (JP)**

(72) Inventor: **Tatsuya, Miyazaki**
**Chuo-ku**
**Kobe-shi**
**Hyogo-ken (JP)**

(74) Representative: **Manitz, Finsterwald & Partner GbR**
**Postfach 31 02 20**
**80102 München (DE)**

(56) References cited:
**EP-A- 1 568 735**
**EP-A- 1 852 463**
**WO-A-2006/002672**
**US-A1- 2005 236 087**

- **DATABASE WPI Week 200636 Thomson Scientific, London, GB; AN 2006-347220 XP002526166 & JP 2006 124602 A (YOKOHAMA RUBBER CO LTD) 18 May 2006 (2006-05-18)**

Remarks:
The file contains technical information submitted after the application was filed and not included in this specification

EP 2 072 280 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a rubber composition for topping a case and/ or a breaker used for a run-flat tire and a run-flat tire using the same.

In the run-flat tire, there is required run-flat durability such as rolling resistance and running ability at deflate state (suppressing bending of a sidewall and suppressing heat build-up itself and separation at generating heat) in addition to the improvement of steering stability such as break performance at high speed running and ride quality.

It has been known that a modified resorcinol is used for topping rubber compounding for a fiber cord and a cord and the periphery of the cords is cured to improve separation property between a cord and a cord.

It is also known that a phenol resin is partially used in addition to the modified resorcinol, and a butadiene rubber and a styrene-butadiene rubber is used in combination as a rubber component in addition to a natural rubber to improve reversion property and crack growth property.

As a method of improving the steering stability in a rubber composition for covering fiber cords, there is known a technique of improving a complex elastic modulus (E≠) and improving rigidity. Specifically, a method of compounding a phenol resin has been known. However, there has been a problem that the rolling resistance (tan δ) of a rubber composition is increased.

As a technique for improving E* and reducing tan δ, there is generally known a method of crosslinking a resorcinol condensate and a modified resorcinol condensate with a partial condensate of hexamethylolmelamine pentamethyl ether (HMMPME) and a partial condensate of hexamethoxymethylolmelamine (HMMM). However, in this case, crosslinking is started in the processing of a sheet and topping during a preparation step of a rubber composition, which results in increasing rubber viscosity; therefore, processability is deteriorated.

Further, as a technique for improving E* and reducing tan δ, another technique such as highly compounding sulfur and highly compounding a vulcanization accelerator has been also further known. However, natural effect is remarkable at running and durability is deteriorated.

Further, in recent years, a fuel saving tire excellent in fuel saving property has been required, and a technology of improving a tread and a sidewall to attain low fuel consumption has been actively developed.

However, the contribution rate of a cord topping rubber to fuel is enlarged as a result in accordance with the proceeding of the fuel saving of large size members such as a tread and a sidewall.

It has been cleared that the reduction of tan δ is effective for reducing the fuel cost of a cord topping rubber due to FEM analysis, but a technology effective for reducing tan δdoes not exist in the cord topping rubber.

As a method of reducing tan δ, there exist a method of decreasing the compounding amount of fillers (filler for reinforcement) such as carbon black and silica and a method of increasing the compounding amount of oil. However, when the compounding amount of carbon black is decreased, it provokes the lowering of fracture property and when the compounding amount of oil is increased, fracture property is not only lowered but also oil is transferred to adjacent members such as a sidewall, an inner liner and a cushion rubber and durability is also deteriorated. Further, when the compounding amount of filler is decreased, the Hs (E*) of a case topping is lowered and durability, in particular, run-flat durability tends to be lowered.

There is considered a method of enhancing Hs by increasing the compounding amount of a modified resorcinol and carbon black. However, even if only the compounding amount of a modified resorcinol and carbon black is increased, the run-flat durability tends to be not adequately improved.

In the patent document 1, a rubber composition including a compound capable of providing a methylene group and a resorcinol resin and being preferably used for a breaker edge part is disclosed. However, it includes only a natural rubber and/or an isoprene rubber as a rubber component and is high in sulfur (4 to 6 parts by weight); therefore improvement is required yet from the viewpoint of causing the lowering of physical properties caused by reversion.

The patent document 2 discloses a rubber composition for covering carcass cords including specific amounts of zinc oxide, a resorcinol condensate or a modified resorcinol condensate and a partial condensate of hexamethylolmelamine pentamethyl ether or a partial condensate of hexamethoxymethylolmelamine based on a specified amount of a rubber component including a natural rubber, an isoprene rubber, a butadiene rubber and a styrene-butadiene rubber, for the purpose of providing a rubber composition for covering a carcass cord in which adhesion with a carcass cord is improved suppressing the growth of crack, heat build-up property and the lowering of rubber properties and a carcass cord covered with the rubber composition. However, there is still a need for the enhancement of a Hs (hardness) of the case topping in a run-flat tire, the enhancement of the run-flat durability and further, the improvement of tan δ.

The patent document 3 discloses an OK tire equipped with a sectional falcate side reinforcing rubber layer wherein the topping rubber of a carcass ply includes specific amounts of sulfur, at least one compound selected from the group consisting of a cresol resin, a resorcinol condensate and a modified resorcinol condensate and a partial condensate of hexamethylolmelamine pentamethyl ether or a partial condensate of hexamethoxymethylolmelamine, based on a rubber component for the purpose of providing a tire. However, there is a need for improving a Hs (hardness) of the case topping is enhanced, tan δ is lowered and the run-flat (RF) durability and rolling resistance is improved.

[Patent document 1] Japanese Unexamined Patent Publication No. 2004-217817
[Patent document 2] Japanese Unexamined Patent Publication No. 2006-328194
[Patent document 3] Japanese Unexamined Patent Publication No. 2007-69774

JP 2006-124,602 discloses a rubber composition comprising a butadiene rubber including rubber component, silica, a phenol-type antiaging agent, pentamethoxymethylmelamine and m-cresol resin.

EP 1 852 463 A1 relates to a rubber composition for coating a cord comprising 0.5 to 10 parts by weight of a phenol resin and/or a modified phenol resin and 0.5 to 5 parts by weight of at least one compound selected from the group consisting of resorcin, resorcin condensate, a modified resorcin condensate, a cresol resin and a modified cresol resin on the basis of 100 parts by weight of a rubber component.

EP 1 568 735 A discloses a rubber composition for coating a belt layer steel cord comprising 2.5 to 4 parts by weight of sulfur, 0.5 to 5 parts by weight of resorcin or a modified resorcin condensate, 0.3 to 3 parts by weight of a partial condensate of hexamethylolmelaminepentamethylether or a partial condensate of hexamethoxymethylolmelamine and organic cobalt based on 100 parts by weight of a rubber component.

It is an object of the present invention to provide a rubber composition for topping a case and/or a breaker used for a run-flat tire capable of obtaining adequate hardness and excellent in low heat build-up property, elongation at break, complex elastic modulus and run-flat durability and a tire using the same.

As a result of the study by the present inventors, it is has been found that run-flat durability can be improved by limiting the compounding amount of at least one compound selected from the group consisting of a cresol resin, a resorcinol condensate and a modified resorcinol condensate and the compounding amount of a softening agent to a specified range.

The present invention relates to a rubber composition for topping a case and/or a breaker used for a run-flat tire, including (B) 2 to 3.5 parts by weight of sulfur, (C) 2 to 10 parts by weight of at least one compound selected from the group consisting of a cresol resin, a resorcinol condensate and a modified resorcinol condensate and (D) 4 to 15 parts by weight of a softening agent based on (A) 100 parts by weight of a rubber component, wherein the rubber component (A) comprises a natural rubber and/or an isoprene rubber and further comprises at least 2 of synthetic rubbers selected from the group consisting of a butadiene rubber, a modified butadiene rubber, a styrene-butadiene rubber and a modified styrene-butadiene rubber, wherein the rubber component (A) comprises i) 10 to 50 % by weight of a modified butadiene rubber or ii) 10 to 40 % by weight of a modified styrene-butadiene rubber or iii) a modified butadiene rubber and a modified styrene-butadiene rubber as a synthetic rubber.

In the rubber composition for topping a case and/or a breaker used for a run-flat tire, the rubber component (A) is a rubber component comprising a natural rubber and/or an isoprene rubber and further comprising at least two of synthetic rubbers selected from the group consisting of a butadiene rubber, a modified butadiene rubber, a styrene-butadiene rubber and a modified styrene-butadiene rubber, wherein the rubber component (A) comprises i) 10 to 50 % by weight of a modified butadiene rubber or ii) 10 to 40 % by weight of a modified styrene-butadiene rubber or iii) a modified butadiene rubber and a modified styrene-butadiene rubber as a synthetic rubber.

The rubber composition for topping a case and/or a breaker used for a run-flat tire further includes preferably 1 to 3 parts by weight of (E) hexamethylenetetramine based on 100 parts by weight of the rubber component (A).

The rubber composition for topping a case and/or a breaker used for a run-flat tire further includes preferably 0.5 to 3 parts by weight of (F) a partial condensate of hexamethylolmelamine pentamethyl ether or a partial condensate of hexamethoxymethylolmelamine based on 100 parts by weight of the rubber component (A).

The rubber composition for topping a case and/or a breaker used for a run-flat tire is preferable in that the rubber component (A) includes a modified butadiene rubber and a modified styrene-butadiene rubber as a synthetic rubber.

The rubber composition for topping a case and/or a breaker used for a run-flat tire is preferable in that the rubber component (A) comprises 40 to 80 % by weight of a natural rubber and/or an isoprene rubber and 10 to 30 % by weight of a modified butadiene rubber.

The rubber composition for topping a case and/or a breaker used for a run-flat tire is preferable in that a fiber cord is covered and used as a case and/or a breaker.

Further, the present invention relates to a run-flat tire, wherein the rubber composition for topping a case and/or a breaker used for a run-flat tire is used for a case and/or a breaker.

Fig. 1 is the meridian sectional view showing the normal inner pressure state of the run-flat tire of the present invention. Symbols in the Drawings:

| | |
|---|---|
| 1 | Run-flat tire |
| 2 | Tread part |
| 2A | Tire outer face |
| 3 | Sidewall part |

| | |
|---|---|
| 4 | Bead part |
| 5 | Bead core |
| 6 | Carcass (case) |
| 6A | Carcass ply |
| 6a | Ply main body part |
| 6b | Ply folding part |
| 6be | Outer edge part wound up exceeding the bead apex rubber to the outside of radial direction |
| 7 | Belt layer |
| 7A, 7B | Belt ply |
| 8 | Bead apex rubber |
| 9 | Band layer |
| 10 | Side reinforcing rubber layer |
| 10i | Inner edge of side reinforcing rubber layer to tire radial direction |
| 10o | Outer edge of side reinforcing rubber layer to tire radial direction |
| 11 | Rim protect rib |
| 13 | Clinch rubber |
| ha | Height to tire radial direction of bead apex rubber from bead base line |
| j | Basis contour line |
| t | Maximum thickness of side-reinforcing rubber layer |
| BL | Bead base line |
| BW | Ply width to tire axial direction of belt ply |
| EW | Width to tire axis direction of the duplicate part of the ply folding part with the tread-reinforcing cord layer |
| SH | Tire sectional height |
| SW | Tire maximum sectional width from tire equatorial face |
| Wi | Duplicate width to tire radial direction of side reinforcing rubber layer with bead apex rubber |
| Wo | Duplicate width to tire axial direction of side reinforcing rubber layer with belt layer |

The rubber composition for topping a case and/or a breaker used for a run-flat tire in the present invention means a rubber composition for topping that covers a reinforcing cord used for a case and/or a breaker in the run-flat tire.

The case and breaker are illustrated.

The rubber composition of the present invention includes (A) a rubber component, (B) sulfur, (C) at least one compound selected from the group consisting of a cresol resin, a resorcinol condensate and a modified resorcinol condensate and (D) softening agent

The rubber component (A) includes a natural rubber (NR) and/or an isoprene rubber (IR) and at least two synthetic rubbers selected from the group consisting of a butadiene rubber (BR), a modified butadiene rubber (modified BR), a styrene-butadiene rubber (SBR) and a modified styrene-butadiene rubber (modified SBR).

NR is not specifically limited and those usually used in the rubber industry can be used. Specific examples include RSS#3 and TSR20 are mentioned. Further, IR is not specifically limited and those conventionally used in the rubber industry can be used.

The content of NR and/or IR in the rubber component (A) is preferably at least 40 % by weight and more preferably at least 50 % by weight. When the content of NR and/or IR is less than 40 % by weight, elongation at break at tensile test tends to be lowered and the rubber composition tends to be broken by being brought in contact with the unevenness of road surface and foreign articles at tire running. Further, the content of NR and/or IR in the rubber component (A) is preferably at most 90 % by weight, more preferably at most 80 % by weight and further preferable at most 75 % by weight. When the content of NR and/or IR exceeds 90 % by weight, reversion tends to be generated at high temperature vulcanization, 100 % cis configuration tends to be transferred to trans configuration, the enervation of polymer configuration tends to be generated and rubber properties such as fracture drag and elongation at break tend to be lowered.

BR is not specifically limited and BR with high cis content (high cis BR) such as BR130B and BR150B available from Ube Industries Ltd. can be preferably used. From the viewpoint of being excellent in crack growth resistance, the content of BR in the rubber component (A) is preferably at least 10 % by weight and more preferably at least 15 % by weight. Further, from the viewpoints that elongation at break is excellent and even if more BR is compounded, the crack growth resistance is saturated and not improved, the content of BR in the rubber component (A) is preferably at most 50 % by weight and more preferably at most 40 % by weight.

The modified BR is obtained by carrying out the polymerization of 1,3-butadiene by a lithium initiator and then adding a tin compound, and further, the terminal of the modified BR molecule is preferably bonded with tin-carbon bond.

Examples of the lithium initiator include lithium compounds such as alkyllithium, aryllithium, vinyllithium, organo tinlithium and organo nitrogenlithium compound, and lithium metal. The modified BR with high vinyl and low cis content

can be prepared by using the lithium initiator as the initiator of the modified BR.

Examples of the tin compounds include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin dichloride, diphenyltin dioctanoate, divinyldiethyltin, tetrabenzyltin, dibutyltin distearate, tetraallyltin and p-tributyltinstyrene. These tin compounds may be used alone or at least two of them may be used in combination.

The content of the tin atom in the modified BR is preferably at least 50 ppm and more preferably at least 60 ppm. When the content of the tin atom is less than 50 ppm, effect for promoting the dispersion of carbon black in the modified BR tends to be little and tan δ tends to be increased. Further, the content of tin atom is preferably at most 3000 ppm, more preferably at most 2500 ppm and further preferably at most 250 ppm. When the content of tin atom exceeds 3000 ppm, the kneaded article tends to be bad in cohesiveness and edge tends not to be trimmed; therefore the extrusion processability of the kneaded article tends to be deteriorated.

The molecular weight distribution (Mw/Mn) of the modified BR is preferably at most 2 and more preferably at most 1.5. When Mw/Mn of the modified BR exceeds 2, the dispersibility of carbon black tends to be deteriorated and tan δ tends to be increased.

The vinyl bond amount in the modified BR is preferably at least 5 % by weight and more preferably at least 7 % by weight When the vinyl bond amount in the modified BR is less than 5 % by weight, the polymerization (production) of the modified BR tends to be difficult. Further, the vinyl bond amount of the modified BR is preferably at most 50 % by weight and more preferably at most 20 % by weight. When the vinyl bond amount of the modified BR exceeds 50 % by weight, the dispersibility of carbon black tends to be deteriorated and tensile strength at break tends to be lowered.

The content of the modified BR in the rubber component (A) is, if present, at least 10 % by weight and preferably at least 15 % by weight When the content of the modified BR is less than 10 % by weight, adequate crack growth resistance tends to be not obtained. Further, the content of the modified BR in the rubber component (A) is, if present, at most 50 % by weight, preferably at most 40 % by weight and further preferably at most 30 % by weight. When the content of the modified BR exceeds 50 % by weight, the crack growth resistance tends to be saturated and not improved even if the content of the modified BR is raised, and the elongation at break tends to be lowered.

As BR satisfying the condition above, for examples, BR1250H available from ZEON Corporation is mentioned.

SBR is not specifically limited and emulsion polymerization SBR (E-SBR) or solution polymerization SBR (S-SBR) can be used. In order to improve processability, E-SBR and S-SBR may be oil-extended during the preparation process. The oil content can be counted as a content of the softening agent (D).

The content of SBR in the rubber component (A) is preferably at least 10 % by weight and more preferably at least 15 % by weight. When the content of SBR is less than 10 % by weight, effect of suppressing reversion tends to be not adequate. Further, the content of SBR in the rubber component (A) is preferably at most 50 % by weight and more preferably at most 40 % by weight. When the content of SBR exceeds 50 % by weight, tensile strength at break tends to be lowered.

The modified SBR in which bonded styrene content is proper such as HPR340 (styrene content of 10 % by weight) or HPR350 (styrene content of 21 % by weight) available from Japan Synthetic Rubber Co., Ltd. is preferable.

The bonded styrene content of the modified SBR is preferably at least 5 % by weight and more preferably at least 7 % by weight from the viewpoint of being excellent in reversion property at rubber compounding. Further, the bonded styrene content of the modified SBR is preferably at most 30 % by weight and more preferably at most 20 % by weight from the viewpoint of being excellent in low heat build-up property.

As the modified SBR, emulsion polymerization modified SBR (modified E-SBR) and solution polymerization modified SBR (modified S-SBR) are mentioned, but since fuel saving property can be improved by strengthening the bond of silica with a polymer chain and reducing tan δ, the modified S-SBR is preferable.

As the modified SBR, those coupled with tin and silicon are preferably used. As the coupling method of the modified SBR, according to a general method, an example includes a method of reacting, for example, alkali metal (such as Li) and alkali earth metal (such as Mg) at the molecular chain terminal of the modified SBR with halogenated tin and halogenated silicon.

The modified SBR is a (co)polymer obtained by (co)polymerizing conjugated diolefin alone or conjugated diolefin with an aromatic vinyl compound and has preferably a primary amino group and an alkoxysilyl group.

The primary amino group may be bonded with either of polymerization initiation terminal, polymerization termination terminal, polymer main chain and side chain, but it is preferable that it is introduced at the polymerization initiation terminal our polymerization termination terminal, because energy evanescence from polymer terminal is suppressed and hysteresis loss property can be improved.

The weight average molecular weight (Mw) of the modified SBR is preferably at least 1 million and more preferably at least 1.2 million because adequate failure property is obtained. Further, Mw of the modified SBR is preferably at most 2 million and more preferably at most 1.8 million because the viscosity of the rubber is adjusted and kneading processing can be easily carried out.

The content of the modified SBR in the rubber component (A) is, if present, at least 10 % by weight and

preferably at least 15 % by weight. When the content of the modified SBR is less than 10 % by weight, reversion property tends to be inferior and tan δ tends to be deteriorated. Further, the content of the modified SBR in the rubber component (A) is, if present, at most 40 % by weight and more preferably at most 35 % by weight. When the content of the modified SBR exceeds 40 % by weight, tensile strength at break tends to be lowered.

When SBR is included among the synthetic rubber selected from the group consisting of the BR, modified BR, SBR and modified SBR, reversion is hardly generated, hardness can be maintained and when BR is included, crack growth resistance is excellent. Further, when the modified BR is included, interaction with carbon black is excellent, the bond of carbon black with the polymer chain can be strengthened, the modified SBR is excellent in interaction with silica and the bond of silica with the polymer chain can be strengthened. The present invention includes at least two of the synthetic rubbers selected from the group consisting of the BR, modified BR, SBR and modified SBR as the rubber component (A) and when it includes carbon black and silica, it is excellent in fuel saving property and tensile strength at break is occasionally improved; therefore the modified BR or the modified SBR is preferably included and both of the modified BR and the modified SBR are preferably included.

As the rubber component (A), other rubber components such as an acrylonitrile-butadiene rubber (SBR), a chloroprene rubber (CR), an ethylene-propylene-diene rubber (EPDM) and a styrene-isoprene-butadiene rubber (SIBR) that have been conventionally used in the rubber industry can be used, in addition to the fore-mentioned NR, IR, BR, modified BR, SBR and modified SBR.

The content of other rubber component in the rubber component (A) is preferably at most 20 % by weight and more preferably at most 15 % by weight, since the crack growth resistance and processability are kept and deterioration property is excellent. Further, other rubber component may not be included.

As the sulfur (B), sulfur generally used at vulcanization in the rubber industry can be used, but insoluble sulfur is preferable. Hereat, the insoluble sulfur means sulfur obtained by heating natural sulfur $S_8$, abruptly cooling it and making high molecular weight so as to be $S_x$ (x = 100,000 to 300,000). Blooming that is usually generated in the case of using sulfur as a rubber vulcanizer can be prevented by using insoluble sulfur.

The content of the sulfur (B) is at least 2 parts by weight and preferably at least 2.4 parts by weight based on 100 parts by weight of the rubber component (A). When the content of the sulfur (B) is less than 2 parts by weight, adequate sulfur is not fed to an adhesion layer with carcass fiber cords and adhesion property is inferior. Further, the content of the sulfur (B) is at most 3.5 parts by weight, preferably at most 3.2 parts by weight and more preferably at most 2.9 parts by weight based on 100 parts by weight of the rubber component (A). When the content of sulfur exceeds 3.5 parts by weight, the density of crosslinking with sulfur is enlarged and fracture property such as fracture drag and elongation at break, in particular, fracture property after degradation by thermal oxidation is lowered.

The rubber composition of the present invention includes at least one compound C (hereinafter, referred to as the compound (C)) selected from the group consisting of a cresol resin, a resorcinol condensate and a modified resorcinol condensate.

Since the chemical softening point of the cresol resin is nearby 100°C (92 to 107°C), it is solid at normal temperature, but since it is liquid at kneading the rubber, it is easily dispersed and further, since a reaction initiation temperature with hexamethylenetetramine (HMT) is around at 130°C, at most the vulcanization temperature of a tire (145 to 190°C), which is suitable, a metacresol resin represented by the following formula (1) is most preferably used.

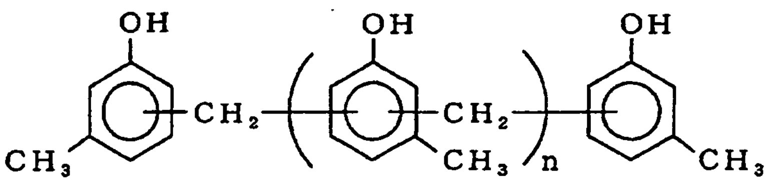

(1)

n in the formula (1) is preferably at least 1 and more preferably at least 2. Further, n in the formula (1) is preferably at most 5.

As the cresol resin, for example, Sumikanol 610 available from Sumitomo Chemical Co., Ltd. is exemplified.

The resorcinol condensate means a compound represented by the following formula (2).

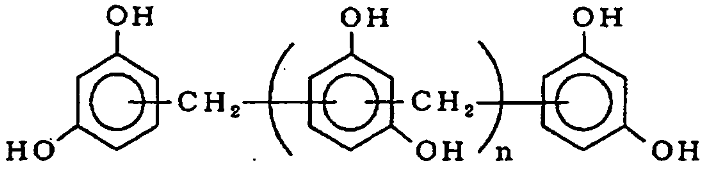

(2)

The modified resorcinol condensate is a condensate in which its terminal is resorcinol as the following formula (3) and its repeating unit has resorcinol or alkylphenol.

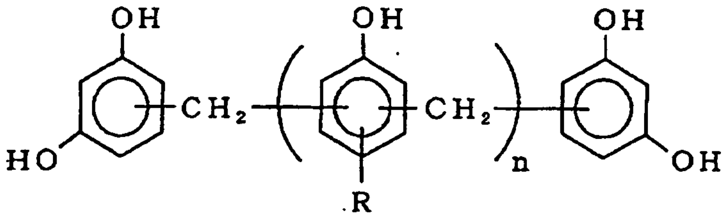

(3)

In the formulae (2) and (3), n is an integer. n is preferably 2 to 5 because dispersibility in the rubber is good.

R in the formula (3) is an alkyl group and carbon number is preferably at most 9 and more preferably at most 8. Specific examples of the alkyl group of R in the formula (3) include a methyl group, an ethyl group and an octyl group. Further, the modified resorcinol condensate may be the mixture of resorcinol and alkylphenol as a repeating unit.

The modified resorcinol condensate includes, for example, a resorcinol-alkylphenol-formalin copolymer (Sumikanol 620 available from Sumitomo Chemical Co., Ltd.) and a Penacolite resin being a resorcinol-formalin reaction product (1319S available from Indospec Asia Co.).

The content of the compound (C) is at least 2 parts by weight, preferably at least 2.5 parts by weight and more preferably at least 3 parts by weight based on 100 parts by weight of the rubber component (A). When the content of the compound (C) is less than 2 parts by weight, adequate hardness is not obtained. Further, the content of the compound (C) is at most 10 parts by weight and preferably at most 8 parts by weight based on 100 parts by weight of the rubber component (A). When the content of the compound (C) exceeds 10 parts by weight, hardness is too large, and crack growth resistance and elongation at break are lowered.

The rubber component of the present invention includes a softening agent (D).

Agglomerate is formed at mixing with carbon black by compounding at least one compound selected from the group consisting of a cresol resin, a resorcinol condensate and a modified resorcinol condensate in the rubber component and Hs (hardness) of the rubber itself can be improved. It is considered that the agglomerate contributes the size of agglomerate formed by carbon black in the rubber component.

The softening agent such as oil is not compounded in the side reinforcing layer (insert) of the run-flat tire. It is considered that in the run-flat tire, the softening agent (oil) compounded in the rubber composition for topping a case flows out to the side-reinforcing layer (insert) and the rubber nearby the case of the side-reinforcing layer (insert) is softened. Since the softening agent (oil) flows out to the side-reinforcing layer (insert), the rubber composition for topping a case is cured and Hs (hardness) necessary at deflate running is obtained.

The dispersion of fillers such as carbon and silica is accelerated by compounding the softening agent (D) with the rubber component of the present invention and the improvement of Hs (hardness), the reduction of tan $\delta$, the improvement of tensile strength at break and the improvement of sheet processability are obtained.

As the softening agent (D), softening agents usually used in the rubber industry, such as aroma oil, mineral oil, an adhesive resin, and plant oil (for example, coconut oil and soybean oil) can be used.

As the adhesive resin, those usually used in the rubber industry, specifically such as a petroleum resin (C5 and C9 series), a petroleum resin (phenol series), a petroleum resin (DCPD resin), a natural resin (terpene resin), a natural resin (rosin resin) and a food plant resin can be used.

As the softening agent (D), it is the most preferable that mineral oil and then aromatic oil (paraffin component in the oil is 67 % of mineral and 45 % of aromatic oil) being the softening agent is used for the reason that the transfer of oil from the polymer of a case rubber to the insert rubber is accelerated, insert is softened and sulfur in the insert is introduced to the case.

Examples of the softening agent (D) include mineral oil (Mineral oil available from Japan Energy Corporation),

mineral oil (DIANA PROCESS OIL PA-32 available from Idemitsu Kosan Co., Ltd.) and aromatic oil (X-140 available from Japan Energy Corporation).

The content of the softening agent (D) is at least 4 parts by weight, preferably at least 5 parts by weight and more preferably at least 6 parts by weight based on 100 parts by weight of the rubber component (A) for the reason that the softening agent flows out from the case rubber to the insert, (1) the insert is softened and then, (2) sulfur flows out inversely from the insert to the case rubber. Further, the content of the softening agent (D) is at most 15 parts by weight, preferably at most 13 parts by weight and preferably at most 11 parts by weight based on 100 parts by weight of the rubber component (A) for the reason-that the adhesion property of cord topping interface with the rubber is not blocked.

When crosslinking is started during processing of a sheet and topping, rubber viscosity is increased and processability is lowered; therefore it is preferable in the present invention that hexamethylenetetramine (HMT) (E) which is not decomposed at processing temperature (90 to 140°C) is included.

The content of hexamethylenetetramine (HMT) (E) is preferably at least 0.1 part by weight and more preferably at least 0.5 part by weight based on 100 parts by weight of the rubber component (A). When the content of hexamethylenetetramine (HMT) (E) is less than 0.1 part by weight, the adequate crosslinking formation of the compound (C) and the hardness of the rubber composition tends to be not obtained. Further, the content of hexamethylenetetramine (HMT) (E) is preferably at most 3 parts by weight and more preferably at most 2.5 parts by weight based on 100 parts by weight of the rubber component (A). When the content of hexamethylenetetramine (HMT) (E) exceeds 3 parts by weight, ammonia generated at thermal decomposition destroys the adhesion layer of the cord with the rubber and rubber adhesion is lowered.

In the present invention, since ammonia generated at the decomposition of hexamethylenetetramine (HMT) to formalin and ammonia can be rendered harmless and cord adhesion can be improved, a partial condensate of hexamethylolmelamine pentamethyl ether (HMMPME) or a partial condensate of hexamethoxymethylolmelamine (HMMM) (hereinafter, referred to as the compound (F)) may be included.

The partial condensate of hexamethylolmelamine pentamethyl ether (HMMPME) means a compound represented by the following formula (4).

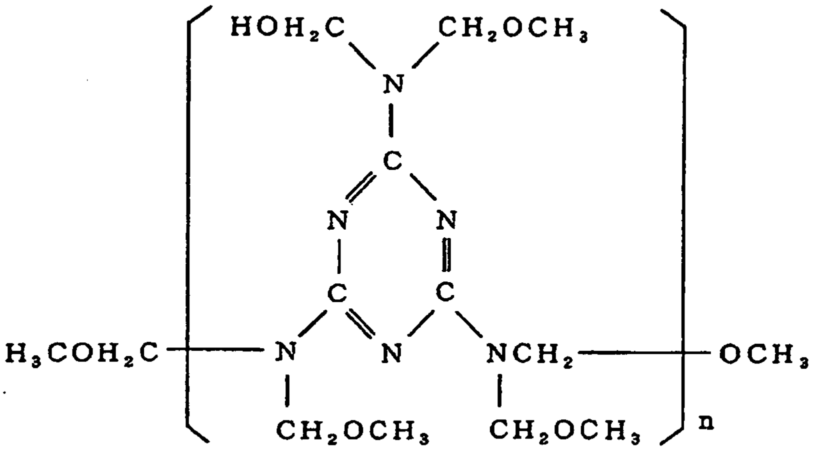

(4)

(wherein n is an integer and n is usually 1 to 3.)

The partial condensate of hexamethoxymethylolmelamine (HMMM) means a compound represented by the following formula (5).

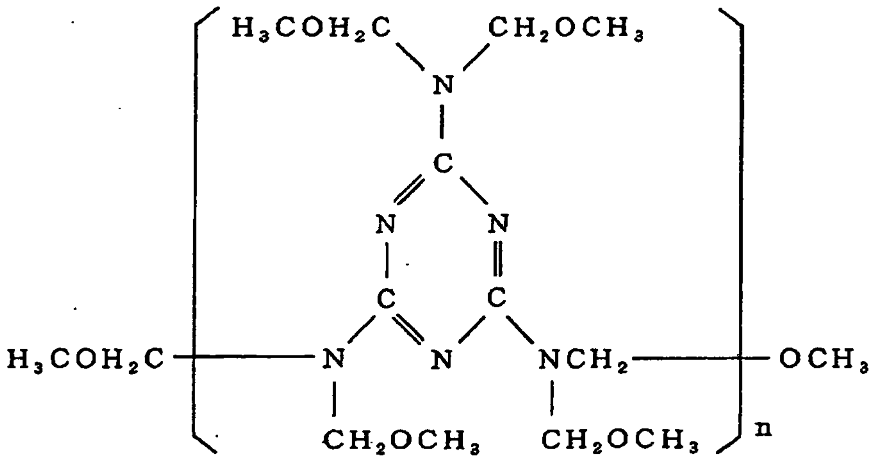

(5)

(n in the formula (5) is an integer and n is usually 1 to 3.)

The content of the compound (F) is preferably at least 0.5 part by weight and more preferably at least 0.7 part by weight based on 100 parts by weight of the rubber component (A).When the content of the compound (F) is less than 0.5 part by weight, adequate hardness tends to be not obtained. Further, the content of the compound (F) is preferably at most 3 parts by weight and more preferably at most 2 parts by weight based on 100 parts by weight of the rubber component (A). When the content of the compound (F) exceeds 3 parts by weight, crosslinking tends to be started during kneading and sheet processing and the viscosity of the compounding rubber tends to be increased.

The rubber composition of the present invention can include fillers for reinforcement such as carbon black, silica, calcium carbonate, aluminum hydroxide, clay, talc and alumina. These fillers for reinforcement may be used alone and at least two of them may be used in combination.

The rubber composition of the present invention can optionally include a vulcanization accelerator and a processing aid such as zinc oxide, stearic acid, unsaturated fatty acid ester and zinc salt of unsaturated fatty acid. These vulcanization accelerator and processing aid may be used alone or at least two of them may be used in combination.

Carbon black and/or silica is not specifically limited and carbon black that have been conventionally used in the rubber industry with grades such as SAF, ISAF, HAF and FEF and silica can be used.

The content of carbon black and/or silica is at least 10 parts by weight and preferably at least 25 parts by weight based on 100 parts by weight of the rubber component (A). When the content of carbon black and/or silica is less than 10 parts by weight, hardness and tensile strength at break tend to be not adequate. Further, the content of carbon black and/or silica is at most 55 parts by weight and preferably at most 55 parts by weight based on 100 parts by weight of the rubber component (A). When the content of carbon black and/or silica exceeds 55 parts by weight, low heat build-up property tends to be enhanced.

When silica is used, a silane coupling agent is preferably used in combination.

The silane coupling agent is not specifically limited and those conventionally compounded in a rubber composition together with silica in the rubber industry can be used. Specific examples include sulfide series such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide and 3-trimethoxysilylpropyl methacrylate monosulfide; mercapto series such as 3-mercaptopropyltrimethoxysilane, 3-mercaptopropyltriethoxysilane, 2-mercaptoethyltrimethoxysilane and 2-mercaptoethyltriethoxysilane; vinyl series such as vinyl triethoxysilane and vinyl trimethoxysilane; amino series such as 3-aminopropyltriethoxysilane, 3-aminopropyltrimethoxysilane, 3-(2-aminoethyl)aminopropyltriethoxysilane and 3-(2-aminoethyl)aminopropyltrimethoxysilane; glycidoxy series such as γ-glycidoxypropyltriethoxysilane, γ-glycidoxypropyltrimethoxysilane, γ-glycidoxypropylmethyldiethoxysilane and γ-glycidoxypropylmethyldimethoxysilane; nitro series such as 3-nitropropyltrimethoxysilane and 3-nitropropyltriethoxysilane; and chloro series such as 3-chloropropyltrimethoxysilane, 3-chloropropyltriethoxysilane, 2-chloroethyltrimethoxysilane

and 2-chloroethyltriethoxysilane. These silane coupling agents may be used alone or at least two may be used in combination. Among these, bis(3-triethoxysilylpropyl)tetrasulfide and bis(3-triethoxysilylpropyl)disulfide are preferably used.

When the silane coupling agent is compounded, the content of the silane coupling agent is preferably at least 6 parts by weight and more preferably at least 8 parts by weight based on 100 parts by weight of silica from the viewpoint that processability and heat build-up property are excellent. Further, the content of the silane coupling agent is preferably at most 12 parts by weight and more preferably at most 10 parts by weight based on 100 parts by weight of silica from the viewpoint that when the silane coupling agent is excessively compounded, excessive silane coupling agent discharges sulfur and a rubber is excessively crosslinked; therefore tensile strength at break is lowered and cost is high.

The content of the fillers for reinforcement other than carbon black and silica is preferably at least 5 parts by weight and more preferably at least 7 part by weight based on 100 parts by weight of the rubber component (A). When the content of the fillers for reinforcement is less than 5 parts by weight, tensile strength at break tends to be not improved. Further, the content of the fillers for reinforcement other than carbon black and silica is preferably at most 50 parts by weight and more preferably at most 40 parts by weight based on 100 parts by weight of the rubber component (A). When the content of the fillers for reinforcement exceeds 50 parts by weight, hardness tends to be too high and tensile strength at break tends to be lowered.

The rubber composition of the present invention can suitably compound compounding agents that are usually used in the rubber industry, such as aroma oil, various antioxidants, zinc oxide, stearic acid and various vulcanization accelerators, in addition to the rubber component (A), sulfur (B), compound (C), softening agent (D), hexamethylenetetramine (HMT) (E), compound (F) and fillers for reinforcement such as carbon black and/or silica.

The rubber composition of the present invention can be used for various members such as a case, a breaker, a bead apex, a clinch apex and a band and although it is not specifically limited, it is preferably used as a case or a breaker because it is high hardness and excellent in reinforcement property and crack growth resistance. When the rubber composition of the present invention is used as a case and a breaker, a tire can be produced by covering fiber cords with the rubber composition, molding the case and breaker, then laminating them with other members, molding an unvulcanized tire and vulcanizing it

The fiber cords mean fiber cords covered with the rubber composition of the present invention when the rubber composition of the present invention is used as the case and breaker. Specifically, they are those obtained by raw materials such as polyester, nylon, rayon, polyethylene terephthalate and aramid. Among these, polyester and aramid are preferable as the raw material of fiber cords because of being excellent in thermal stability and further being moderate price.

Hereinafter, one embodiment of the present invention is illustrated together with examples shown in the drawings.

Fig. 1 is the meridian sectional view showing the normal inner pressure state of the run-flat tire of the present invention.

In Fig. 1, the run-flat 1 of the present Embodiment is equipped with a carcass 6 from a tread part 2 to the bead core 5 of a bead part 4 through a sidewall part 3, a tread reinforcing cord layer 7 provided at the inside of the tread part 2 and at the outside of radial direction of the carcass 6 and a side reinforcing rubber layer 10 provided at the inside of a sidewall potion 3 and the carcass 6.

The carcass 6 is formed by at least one of carcass ply, one carcass ply 6A in the present example obtained by covering carcass cords, for example, arranged at an angle of 70 to 90° against tire circumferential direction, with topping rubber. As the carcass cords, organic fiver cords such as nylon, polyester, rayon and organic polyamide. The carcass ply 6A is equipped in series with a ply folding part 6b that is folded from the inside of tire axis direction to outside around the bead core 5 at both sides of the ply main body part 6a straddling between the bead cores 5 and 5.

Between the ply main body part 6a and the ply folding part 6b, there is provided a bead apex rubber 8 for bead reinforcement that comprises a hard rubber with a rubber hardness of 65 to 95 degree and extends dwindlingly from the bead core 5 to the outside of radial direction. The height ha to tire radial direction of the bead apex rubber 8 from bead base line BL is not specifically limited, but when it is too small, run-flat durability is easily lowered and to the contrary, when it is too large, there is fear that the excessive increase of tire mass and the deterioration of ride quality is induced. From the viewpoints, the height ha of the bead apex rubber 8 is 10 to 60 % of tire sectional height SH and more preferably about 20 to 40 % is desired.

Further, in the present example, the ply folding part 6b of the carcass 6 is wound up exceeding the bead apex rubber 8 to the outside of radial direction and its outer edge part 6be is equipped with a so-called high turn-up carcass structure in which it is terminated by being sandwiched between the ply main body part 6a and the belt layer 7. Thereby, the sidewall part 3 can be effectively reinforced using one carcass ply 6A. Further, since the outer edge part 6be of the ply folding part 6b is separated from the sidewall part 3 greatly bent at run-flat running, damage originated from the outer edge part 6be can be preferably suppressed. The width EW to tire axis direction of the duplicate part of the ply folding part 6b with the belt layer 7 is at least 5 mm and further, preferably at least 10 mm and its upper limit is preferably at

most 25 mm from the viewpoint of weight saving. Further, when the carcass 6 is formed by a plurality of carcass plies, it is preferable that at least one carcass ply assumes the mode.

Then, in the present example, the belt layer 7 is formed by belt plies 7A and 7B at the inside and outside to radial direction covering belt cords arranged, for example, at an angle of 10 to 35° against the tire circumferential direction with topping rubber. Respective belt cords enhance belt rigidity by mutually crossing between plies and reinforce firmly the tread part 2 with laggen-gird effect Hereat, an inner belt ply 7A is widest in the belt layer 7, the laggen-gird effect is provided over the whole area of the tread part 2 by setting the ply width BW to tire axial direction of the belt ply 7A as a range of 0.70 to 0.95-fold of tire maximum sectional width SW, and the specific profile of tire outer face described later is maintained. Further, at the outside to radial direction of the belt layer 7, a band layer 9 in which organic fiber band cords such as nylon are spirally wound at an angle of at most 5° against the tire circumferential direction can be provided, in order to enhance high speed durability.

Herein, the "the tire maximum sectional width SW" is the maximum width at the basis contour line j of the tire outer face, and the basis contour line j means smooth contour line excluding local irregularity parts such as, for example, fine ribs and grooves for decoration and information indicating characters, figures and codes, the rim protect rib for preventing the removal of rim and a side protect rib for preventing cut blemish.

In the present example, a case in which rim protect rib 11 is protrudingly provided at the bead part 4 is exemplified. As shown in Fig. 1, the rim protect rib 11 is a rib body protruded from basis contour line j so as to cover a rim flange JF, and forms a sectional trapezoidal shape that is surrounded by a protrusion face part 11c most protruded at the outside of tire axial direction, a slant face part 11i at the inside of radial direction smoothly linked with the bead outside face from the protrusion face part 11c and a slant face part 11o at the outside of radial direction smoothly linked with the basis contour line j nearby the tire maximum width point M from the protrusion face part 11c. Further, the slant face part 11i at the inside is formed by a concave arc face formed by a curvature radius r larger than the arc part of the rim flange JF, and protects the rim flange JF from curbstones at usual running. Further, since the slant face part 11i at inside is reclininglly brought in contact with the arc part of the rim flange JF at the run-flat running, vertical bending quantity of a tire can be reduced and is of help to the improvement of the run-flat performance and run-flat durability.

Then, the side-reinforcing rubber layer 10 forms a sectional falcate shape that gradually decreases respectively to be extended from the central part 10a having maximum thickness to the inner edge 10i and the outer edge 10o to tire radial direction. The inner edge 10i is situated at the inside to the tire radial direction than the outer edge of the bead apex rubber 8 and the outer edge 10o is situated at the inside to tire axial direction than the outer edge 7e of the belt layer 7. At this time, it is preferable that a duplicate width Wi to tire axial direction of the side-reinforcing rubber layer 10 with the bead apex rubber 8 is 5 to 50 mm and a duplicate width Wo to tire axial direction of the side-reinforcing rubber layer 10 with the belt layer 7 is 0 to 50 mm, and thereby, the generation of rigidity bump at the outer edge 10o and the inner edge 10i is suppressed.

Since the side-reinforcing rubber layer 10 is provided at the inside (tire inner cavity side) of the ply main body part 6a of the carcass 6, compressive load acts mainly for the side reinforcing rubber layer 10 at the bending deformation of the sidewall part 3 and tensile load acts mainly for the carcass ply 6A having a cord material. Since a rubber is strong for compressive load and the cord material is strong for tensile load, the provision structure of the above-mentioned side-reinforcing rubber layer 10 enhances efficiently the bending rigidity of the sidewall part 3 and can effectively reduce the vertical bending of a tire at run-flat running. Further, the rubber hardness of the side-reinforcing rubber layer 10 is preferably at least 60° and further preferably at least 65°. When the rubber hardness is less than 60°, compressive strain at the run-flat running is enlarged and the run-flat performance becomes inadequate. Inversely, even if the rubber hardness is too high, the vertical spring constant of a tire is excessively raised and ride quality cannot be improved even by the present invention. From these viewpoints, the upper limit of the rubber hardness of the side-reinforcing rubber layer 10 is at most 80° and further, preferably at most 75°. Further, the maximum thickness t of the side-reinforcing rubber layer 10 is suitably set depending on a tire size and the category of a tire but is generally 5 to 20 mm in case of a tire for an automobile.

Further, a code 13 in Fig. 1 is a clinch rubber for preventing rim misalignment that forms the cortex of the bead part 4.

Further, in the present invention, the tire outer face 2A is formed by specific profile proposed in Japanese Patent Publication No. 2994989 in order to suppress the rubber volume of the side-reinforcing rubber layer 10 to minimum and to improve the light weight of a tire and ride quality while keeping run-flat performance.

Specifically, the tire outer face 2A at tire meridian section in normal inner pressure state in which the tire 1 was loaded on a normal rim and normal inner pressure was filled is defined as follow.

In the run-flat tire, the case (carcass) plays a role of keeping a tire structure (skeleton of tire). At inflate state, the case receives inner pressure and mediates motive energy (distortion propagation) transmitted from the rim to the tread. In deflate state, it is required that the case mediates bending, distortion and motive energy in cooperation with the insert, and low heat build-up and not damaging adhesion property with the sidewall rubber, clinch rubber and breaker rubber even at a high temperature are also required.

EXAMPLES

The present invention is specifically illustrated based on Examples but the present invention is not only limited thereto.

Various chemicals used in Examples and Comparative Examples are illustrated below in summary.

Natural rubber (NR): RSS#3
Modified butadiene rubber (modified BR): Nipol BR1250H available from ZEON Corporation (Lithium initiator: lithium, content of tin atom: 250 ppm, Mw/Mn: 1.5, vinyl bond amount: 10 to 13 % by weight)
Styrene-butadiene rubber (SBR1502): Nipol 1502 (styrene content of 23.5 % by weight) available from ZEON Corporation
Styrene-butadiene rubber (SBR1723): SBR1723 available from Japan Synthetic Rubber Co., Ltd. (styrene content of 23.5 % by weight, oil (softening agent for rubber) content: oil-extended in an amount of 37.5 parts by weight based on 100 parts by weight of rubber component (SR1502) (72.7 % by weight of rubber component and 27.3 % by weight of oil)). Oil used for extension mainly comprises TDAE (obtained by refining of petroleum) and its composition is close to the composition of aromatic oil. As shown in Table 1, SBR1723 is blended in an amount of 27.5 parts by weight of, and comprises 20 parts by weight of rubber component (SBR1502) and 7.5 parts by weight of oil. Modified SBR (HPR350): HPR350 (styrene content of 21 % by weight) available from Japan Synthetic Rubber Co., Ltd.
Carbon black: SHOWBLACK N326 available from CABOT JAPAN K. K. Aroma oil: Softening agent, Process X-140 available from Japan Energy Corporation
Mineral oil: Softening agent, Mineral oil available from Japan Energy Corporation
Adhesive resin 1: Softening agent, MARUKAREZ T-100A available from Maruzen Petrochemical Co., Ltd.
Adhesive resin 2: Softening agent, R7510P available from Sqenector Inc.
Adhesive resin 3: Softening agent, Nissin Soy Bean Refined Oil S available from Nissin Oillio Group Co.
Adhesive resin 4: Softening agent, CHINA Rosin 140 available from Arakawa Chemical Industries Ltd.
Zinc oxide: GINREI R available from Toho Zinc Co., Ltd.
Antioxidant: NOCLAC 224 (2,2,4-trimethyl-1,2-dihydroquinoline polymer) available from OUCHISHINKO CHEMICAL INDUSTRIAL CO., LTD.
Stearic acid: TSUBAKI available from Nihon Oil & Fats Co., Ltd.
Insoluble sulfur: CRISTEX HSOT20 available from FLEXIS Co., Ltd.
(insoluble sulfur containing 80 % by weight of sulfur and 20 % by weight of oil)
Vulcanization accelerator: NOCCELER NS (N-tert-butyl-2-benzothiazolylsulfenamide) available from OUCHISHINKO CHEMICAL INDUSTRIAL CO., LTD.
N-cyclohexylthiophthalimide (CTP): RETARDER CTP available from OUCHISHINKO CHEMICAL INDUSTRIAL CO., LTD.
Modified resorcinol resin: Sumikanol 620 (resorcinol-alkylphenol condensate) available from Sumitomo Chemical Co., Ltd.

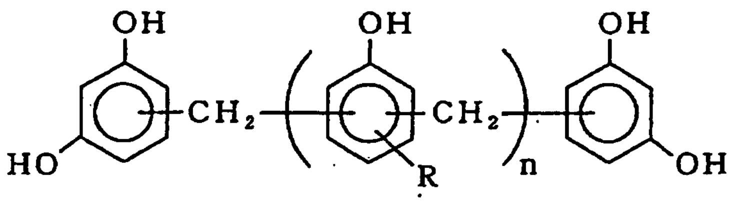

(wherein R is a p-methyl group ($CH_3$- at para-position) and a p-octyl group ($C_8H_{17}$- at para-position) and these may exist in mixture, and n is 2 to 5.)
Hexamethylenetetramine (HMT): NOCCELER H available from OUCHISHINKO CHEMICAL INDUSTRIAL CO., LTD.
Partial condensate of hexamethoxymethylolmelamine pentamethyl ether (HMMPME): Sumikanol 507A; Effective resin part of (mixture of about 65 % of substance having a methylene group, silica and oil) available from Sumitomo Chemical Co., Ltd.

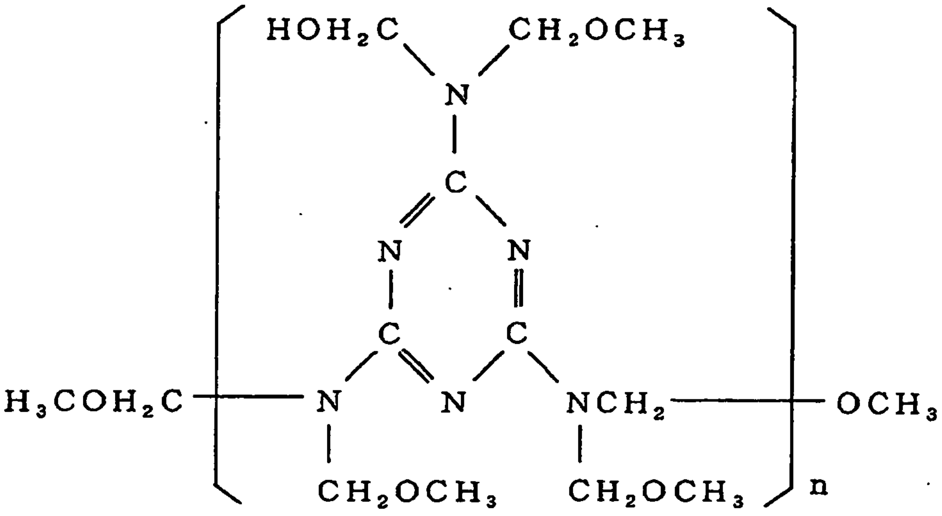

(wherein n is an integer of 1 to 3.)

EXAMPLES 1 to 15 and COMPARATIVE EXAMPLES 1 to 12

Various chemicals excluding insoluble sulfur and vulcanization accelerators (when HMT and the partial condensates of HMMPME and CTP were compounded, these were also included) were kneaded according to the compounding prescription shown in Tables by a Banbury mixer. Insoluble sulfur and vulcanization accelerators (when HMT and the partial condensates of HMMPME and CTP were compounded, these were also included) were added to the kneaded articles and kneaded with an open roll to obtain unvulcanized rubber compositions. The vulcanized rubber compositions of Examples 1 to 15 and Comparative Examples 1 to 12 were obtained by carrying out the press vulcanization of the unvulcanized rubber compositions under condition of 170°C for 12 minutes.

(Mooney viscosity)

Test pieces with a fixed size were prepared from the unvulcanized rubber compositions and the Mooney viscosities ($ML_{1+4}$) of the unvulcanized rubber compositions were measured at the lapse of time for 4 minutes by rotating a small rotor at temperature condition of 130°C heated by preliminary heating for 1 minute in accordance with JIS K 6300 "Test method of unvulcanized rubber" using a Mooney viscosity tester manufactured by Shimadzu Corporation.

(Viscoelasticity test)

The complex elastic modulus E* and loss tangent tan δ of vulcanized rubber compositions at 70°C were measured under the condition of an initial strain of 10 %, a dynamic strain of 2 % and a frequency of 10 Hz using a viscoelastic spectrometer manufactured by Iwamoto Seisakusyo K.K. Further, the larger the E* is, the higher the rigidity is, and it is indicated that steering stability is excellent. It is indicated that the smaller the tan δ is, the more excellent the low heat build-up property is.

(Tensile test)

Tensile test was carried out in accordance with JIS K 6251 "Vulcanized rubber and Thermoplastic rubber --- Determination method of tensile property", using No.3 dumbbell test pieces comprising the vulcanized rubber compositions and the elongation at break $E_B$ (%) of respective test pieces (at new products) was measured ($E_B$ of new products). Further, it is indicated that the larger the $E_B$ of the new products is, the more excellent it is.

(Run flat durability test (RF durability test))

The respective test tires (run-flat tires) were rim assembled in a rim (18 x 8.5 J) from which a valve core was

removed, they ran on a drum tester under the condition of speed (80 km/h), vertical load (4.14 KN: load at 65 % of normal load) and room temperature (38 ± 2°C) at deflate state, running distance until the fracture of tires was measured, and they were evaluated by indices by referring Comparative Example 1 to 100. The larger the figure of the run flat (RF) durability index is, the more excellent the run flat durability is.

(Adhesive test)

Fiber cords on which resorcinol resin film was formed (dipping treatment) were covered with the unvulcanized rubber compositions by immersing the fiber cords (polyester (raw materials: terephthalic acid and ethylene glycol) available from Teijin Limited) in a mix solution of resorcinol and formaldehyde, molding the rubber compositions for topping of an unvulcanized case and then curing therm under 170°C for 12 minutes to prepare case cords and cases comprising the rubber compositions for topping a case.

Adhesive test was carried out using the cases obtained. Then the peeling drag (adhesive force) between the rubber compositions for topping a case which was measured by a tensile tester (manufactured by Instron Inc.) and fiber cords (case cords) was measured. Then, the adhesive index of Comparative Example 1 was assumed to 100 and the peeling drags (adhesion property with a cord) of respective compounds were indicated with an index.

$$\text{(Adhesion property index)} = \text{(Peeling drag of respective compoundings)} / \text{(Peeling drag of Example 1)} \times 100$$

The evaluation results are shown in Tables 1, 2, 3 and 4.

TABLE 1

| | Examples | | | | | | | | |
|---|---|---|---|---|---|---|---|---|---|
| | 1 | 2 | 3 | 4 | 5 | 6 | 7 | 13 | 14 |
| Compounding amount (parts by weight) | | | | | | | | | |
| NR | 60 | 60 | 60 | 60 | 60 | 60 | 60 | 60 | 60 |
| Modified BR | 20 | 20 | 20 | 20 | 20 | 20 | 20 | 20 | 20 |
| SBR1502 | 20 | 20 | 20 | 20 | 20 | 20 | 20 | - | - |
| SBR1723 | - | - | - | - | - | - | - | 27.5 | 27.5 |
| Carbon black | 53 | 53 | 53 | 53 | 53 | 53 | 53 | 53 | 53 |
| Aroma oil | 5 | 7 | 10 | 14 | 7 | 5 | - | - | 6.5 |
| Mineral oil | - | - | - | - | - | - | 7 | - | - |
| Adhesive resin 1 | - | - | - | - | - | 2 | - | - | - |
| Zinc oxide | 5 | 5 | 5 | 5 | 5 | 5 | 5 | 5 | 5 |
| Antioxidant | 1 | 1 | 1 | 1 | 1 | 1 | 1 | 1 | 1 |
| Stearic acid | 3 | 3 | 3 | 3 | 3 | 3 | 3 | 3 | 3 |
| Insoluble sulfur (sulfur content) | 2.5 | 2.5 | 2.5 | 2.5 | 2.5 | 2.5 | 2.5 | 2.5 | 2.5 |
| Vulcanization accelerator | 1.0 | 1.0 | 1.0 | 1.0 | 1.0 | 1.0 | 1.0 | 1.0 | 1.0 |
| CTP | 0.2 | 0.2 | 0.2 | 0.2 | 0.2 | 0.2 | 0.2 | 0.2 | 0.2 |
| Modified resorcinol resin (Sumikanol 620) | 3.5 | 3.5 | 3.5 | 3.5 | 5 | 3.5 | 3.5 | 3.5 | 3.5 |
| HMT | 1.0 | 1.0 | 1.0 | 1.0 | 1.4 | 1.0 | 1.0 | 1.0 | 1.0 |
| Evaluation result | | | | | | | | | |
| Mooney viscosity | 55 | 53 | 51 | 46 | 68 | 54 | 52 | 53 | 45 |
| E* (μPa) | 7.5 | 7.2 | 6.7 | 6.3 | 9.0 | 7.5 | 7.0 | 7.2 | 6.4 |
| tanδ | 0.112 | 0.110 | 0.111 | 0.116 | 0.105 | 0.117 | 0.105 | 0.111 | 0.115 |
| New product $E_B$ | 290 | 300 | 310 | 305 | 220 | 310 | 280 | 305 | 310 |

(continued)

| | Examples | | | | | | | | |
|---|---|---|---|---|---|---|---|---|---|
| | 1 | 2 | 3 | 4 | 5 | 6 | 7 | 13 | 14 |
| RF durability index | 115 | 125 | 120 | 110 | 130 | 115 | 130 | 125 | 115 |
| Adhesion property index with cord | 100 | 115 | 105 | 80 | 100 | 105 | 110 | 115 | 85 |

TABLE 2

| | Comparative Examples | | | | | | |
|---|---|---|---|---|---|---|---|
| | 1 | 2 | 3 | 4 | 5 | 11 | 12 |
| Compounding amount (parts by weight) | | | | | | | |
| NR | 60 | 60 | 60 | 60 | 60 | 60 | 60 |
| Modified BR | 20 | 20 | 20 | 20 | 20 | 20 | 20 |
| SBR1502 | 20 | 20 | 20 | 20 | 20 | - | - |
| SBR1723 | - | - | - | - | - | 27.5 | 27.5 |
| Carbon black | 53 | 53 | 53 | 53 | 53 | 53 | 53 |
| Aroma oil | - | 17 | 7 | 7 | 7 | 9.5 | - |
| Mineral oil | - | - | - | - | - | - | - |
| Adhesive resin 1 | 2 | - | - | - | - | - | - |
| Zinc oxide | 5 | 5 | 5 | 5 | 5 | 5 | 5 |
| Antioxidant | 1 | 1 | 1 | 1 | 1 | 1 | 1 |
| Stearic acid | 3 | 3 | 3 | 3 | 3 | 3 | 3 |
| Insoluble sulfur (sulfur content) | 2.5 | 2.5 | 3.6 | 1.8 | 2.5 | 2.5 | 3.6 |
| Vulcanization accelerator | 1.0 | 1.0 | 1.0 | 1.0 | 1.0 | 1.0 | 1.0 |
| CTP | 0.2 | 0.2 | 0.2 | 0.2 | 0.2 | 0.2 | 0.2 |
| Modified resorcinol resin (Sumikanol 620) | 3.5 | 3.5 | 3.5 | 3.5 | 11 | 3.5 | 3.5 |
| HMT | 1.0 | 1.0 | 1.0 | 1.0 | 1.0 | 1.0 | 1.0 |
| Evaluation result | | | | | | | |
| Mooney viscosity | 58 | 42 | 54 | 54 | 97 | 41 | 53 |
| E* ($\mu$Pa) | 7.9 | 5.8 | 8.9 | 5.8 | 12.3 | 5.7 | 8.7 |
| tan$\delta$ | 0.120 | 0.122 | 0.102 | 0.132 | 0.151 | 0.124 | 0.105 |
| New product $E_B$ | 270 | 260 | 230 | 340 | 120 | 250 | 220 |
| RF durability index | 95 | 80 | 70 | 40 | 50 | 80 | 75 |
| Adhesion property index with cord | 80 | 60 | 125 | 50 | 70 | 55 | 125 |

TABLE 3

| | Examples | | | | | |
|---|---|---|---|---|---|---|
| | 8 | 9 | 10 | 11 | 12 | 15 |
| Compounding amount (parts by wight) | | | | | | |
| NR | 60 | 60 | 60 | 60 | 60 | 60 |
| Modified BR | 20 | 20 | 20 | 20 | 20 | 20 |
| SBR1502 | 20 | 20 | 20 | 20 | 20 | - |
| HPR350 | - | - | - | - | - | 20 |
| Carbon black | 50 | 56 | 53 | 53 | 53 | 53 |
| Aroma oil | 7 | 7 | - | 14 | 5 | 7 |
| Mineral oil | - | - | 10 | - | 5 | - |
| Adhesive resin 1 | - | - | - | - | - | - |

(continued)

| | Examples | | | | | |
|---|---|---|---|---|---|---|
| | 8 | 9 | 10 | 11 | 12 | 15 |
| Adhesive resin 2 | - | - | - | - | - | - |
| Adhesive resin 3 | - | - | - | - | - | - |
| Adhesive resin 4 | - | - | - | - | - | - |
| Zinc oxide | 5 | 5 | 5 | 10 | 5 | 5 |
| Antioxidant | 1 | 1 | 1 | 1 | 1 | 1 |
| Stearic acid | 3 | 3 | 3 | 3 | 3 | 3 |
| Insoluble sulfur (sulfur content) | 3.2 | 2.5 | 2.5 | 2.5 | 2.5 | 2.5 |
| Vulcanization accelerator | 1.0 | 1.0 | 1.0 | 1.0 | 1.0 | 1.0 |
| CTP | 0.2 | 0.2 | 0.2 | 0.2 | 0.2 | 0.2 |
| Modified resorcinol resin (Sumikanol 620) | 3.5 | 2.0 | 3.5 | 3.5 | 3.5 | 3.5 |
| HMT | 1.0 | 0.6 | 1.0 | 1.0 | 1.0 | 1.0 |
| Evaluation result | | | | | | |
| Mooney viscosity | 50 | 57 | 49 | 45 | 52 | 57 |
| E* (μPa) | 7.3 | 7.1 | 6.6 | 6.7 | 6.9 | 7.0 |
| tanδ | 0.104 | 0.129 | 0.106 | 0.112 | 0.109 | 0.098 |
| New product $E_B$ | 280 | 340 | 260 | 335 | 300 | 260 |
| RF durability index | 110 | 110 | 110 | 120 | 125 | 120 |
| Adhesion property index with cord | 125 | 80 | 100 | 105 | 105 | 115 |

TABLE 4

| | Comparative Examples | | | | |
|---|---|---|---|---|---|
| | 6 | 7 | 8 | 9 | 10 |
| Compounding amount (parts by weight) | | | | | |
| NR | 60 | 60 | 60 | 60 | 60 |
| Modified BR | 20 | 20 | 20 | 20 | 20 |
| SBR1502 | 20 | 20 | 20 | 20 | 20 |
| HPR350 | - | - | - | - | - |
| Carbon black | 56 | 53 | 53 | 53 | 53 |
| Aroma oil | 7 | - | - | - | - |
| Mineral oil | - | - | - | - | - |
| Adhesive resin 1 | - | - | - | - | - |
| Adhesive resin 2 | - | - | 2 | - | - |
| Adhesive resin 3 | | - | - | 2 | - |
| Adhesive resin 4 | - | - | - | - | 2 |
| Zinc oxide | 5 | 5 | 5 | 5 | 5 |
| Antioxidant | 1 | 1 | 1 | 1 | 1 |
| Stearic acid | 3 | 3 | 3 | 3 | 3 |
| Insoluble sulfur (sulfur content) | 2.5 | 2.5 | 2.5 | 2.5 | 2.5 |
| Vulcanization accelerator | 1.0 | 1.0 | 1.0 | 1.0 | 1.0 |
| CTP | 0.2 | 0.2 | 0.2 | 0.2 | 0.2 |
| Modified resorcinol resin (Sumikanol 620) | 1.5 | 3.5 | 3.5 | 3.5 | 3.5 |
| HMT | 1.0 | 1.0 | 1.0 | 1.0 | 1.0 |
| Evaluation result | | | | | |
| Mooney viscosity | 53 | 62 | 58 | 58 | 59 |
| E* (μPa) | 6.4 | 8.3 | 8.2 | 8.0 | 8.2 |
| tanδ | 0.133 | 0.122 | 0.124 | 0.122 | 0.130 |

(continued)

| | Comparative Examples | | | | |
|---|---|---|---|---|---|
| | 6 | 7 | 8 | 9 | 10 |
| New product $E_B$ | 360 | 240 | 250 | 250 | 280 |
| RF durability index | 90 | 80 | 85 | 85 | 80 |
| Adhesion property index with cord | 60 | 80 | 70 | 70 | 80 |

Comparing Example 2 (aroma oil) with Example 7 (mineral oil), it is found that the use of mineral oil as a softening agent is better in the run-flat durability.

Comparing Example 4 (5 parts by weight of zinc oxide) with Example 11 (10 parts by weight of zinc oxide), it is grasped that the run-flat durability and adhesion property with a cord is better by increasing the compounding amount of zinc oxide.

According to the present invention, there can be provided a rubber composition for topping a case and/or a breaker used for a run-flat tire capable of obtaining adequate hardness and excellent in processability, roll workability, low heat build-up property, elongation at break, complex elastic modulus and run-flat durability by including the fixed amounts of a fixed sulfur (B), at least one compound (C) selected from the group consisting of a cresol resin, a resorcinol condensate and a modified resorcinol condensate and a softening agent (D) in the rubber component (A), and a tire using the same.

## Claims

**1.** A rubber composition for topping a case and/or a breaker used for a run-flat tire, comprising

(B) 2 to 3.5 parts by weight of sulfur,
(C) 2 to 10 parts by weight of at least one compound selected from the group consisting of a cresol resin, a resorcinol condensate and a modified resorcinol condensate, and
(D) 4 to 15 parts by weight of a softening agent based on (A) 100 parts by weight of a rubber component, wherein the rubber component (A) comprises a natural rubber and/or an isoprene rubber and further comprises at least 2 of synthetic rubbers selected from the group consisting of a butadiene rubber, a modified butadiene rubber, a styrene-butadiene rubber and a modified styrene-butadiene rubber, wherein the rubber component (A) comprises i) 10 to 50 % by weight of a modified butadiene rubber or ii) 10 to 40 % by weight of a modified styrene-butadiene rubber or iii) a modified butadiene rubber and a modified styrene-butadiene rubber as a synthetic rubber.

**2.** The rubber composition for topping a case and/or a breaker used for a run-flat tire of claim 1, wherein the modified butadiene rubber is obtainable by carrying out a polymerization of 1,3-butadiene by a lithium initiator and then adding a tin compound.

**3.** The rubber composition for topping a case and/or a breaker used for a run-flat tire of claim 1 or 2, wherein the rubber component (A) comprises ii) 10 to 40 % by weight of a modified styrene-butadiene rubber or iii) a modified butadiene rubber and a modified styrene-butadiene rubber as a synthetic rubber, wherein the modified styrene-butadiene rubber has a primary amino group and an alkoxysilyl group.

**4.** The rubber composition for topping a case and/or a breaker used for a run-flat tire of any of claims 1 to 3, further comprising 1 to 3 parts by weight of (E) hexamethylenetetramine based on 100 parts by weight of the rubber component (A).

**5.** The rubber composition for topping a case and/or a breaker used for a run-flat tire of any one of claims 1 to 4, further comprising 0.5 to 3 parts by weight of (F) a partial condensate of a hexamethylolmelamine pentamethyl ether or a partial condensate of hexamethoxymethylolmelamine based on 100 parts by weight of the rubber component (A).

**6.** The rubber composition for topping a case and/or a breaker used for a run-flat tire of any one of claims 1 to 5, wherein the rubber component (A) comprises a modified butadiene rubber and a modified styrene-butadiene rubber as a synthetic rubber.

7. The rubber composition for topping a case and/or a breaker used for a run-flat tire of any one of claims 1 to 6, wherein the rubber component (A) comprises 40 to 80 % by weight of a natural rubber and/or an isoprene rubber and 10 to 30 % by weight of a modified butadiene rubber.

8. The rubber composition for topping a case and/or a breaker used for a run-flat tire of any one of claims 1 to 7, wherein a fiber cord is covered and used as a case and/or a breaker.

9. A run-flat tire, wherein the rubber composition for topping a case and/or a breaker used for a run-flat tire of any one of claims 1 to 8 is used for a case and/or a breaker.

**Patentansprüche**

1. Kautschukzusammensetzung zum Beschichten eines Unterbaus und/oder eines Breakers, welcher für einen Notlaufreifen eingesetzt wird, wobei die Kautschukzusammensetzung enthält:

   (B) 2 bis 3,5 Gewichtsteile Schwefel,
   (C) 2 bis 10 Gewichtsteile wenigstens einer Verbindung ausgewählt aus der Gruppe bestehend aus einem Kresolharz, einem Resorcinkondensat und einem modifizierten Resorcinkondensat sowie
   (D) 4 bis 15 Gewichtsteile eines Weichmachers, bezogen auf (A) 100 Gewichtsteile einer Kautschukkomponente, wobei die Kautschukkomponente (A) einen Naturkautschuk und/oder einen Isoprenkautschuk und ferner wenigstens 2 synthetische Kautschuke ausgewählt aus der Gruppe bestehend aus einem Butadienkautschuk, einem modifizierten Butadienkautschuk, einem Styrol-Butadien-Kautschuk und einem modifizierten Styrol-Butadien-Kautschuk enthält, wobei die Kautschukkomponente (A) als synthetischen Kautschuk i) 10 bis 50 Gewichtsprozent eines modifizierten Butadienkautschuks oder ii) 10 bis 40 Gewichtsprozent eines modifizierten Styrol-Butadien-Kautschuks oder iii) einen modifizierten Butadienkautschuk und einen modifizierten Styrol-Butadien-Kautschuk enthält.

2. Kautschukzusammensetzung zum Beschichten eines Unterbaus und/oder eines Breakers, welcher für einen Notlaufreifen eingesetzt wird, nach Anspruch 1, wobei der modifizierte Butadienkautschuk durch Durchführen einer Polymerisation von 1,3-Butadien mit einem Lithiuminitiator und dann durch Zugabe einer Zinnverbindung erhältlich ist.

3. Kautschukzusammensetzung zum Beschichten eines Unterbaus und/oder eines Breakers, welcher für einen Notlaufreifen eingesetzt wird, nach Anspruch 1 oder 2, wobei die Kautschukkomponente (A) als synthetischen Kautschuk ii) 10 bis 40 Gewichtsprozent eines modifizierten Styrol-Butadien-Kautschuks oder iii) einen modifizierten Butadienkautschuk und einen modifizierten Styrol-Butadien-Kautschuk enthält, wobei der modifizierte Styrol-Butadien-Kautschuk eine primäre Aminogruppe und eine Alkoxysilylgruppe aufweist.

4. Kautschukzusammensetzung zum Beschichten eines Unterbaus und/oder eines Breakers, welcher für einen Notlaufreifen eingesetzt wird, nach einem der Ansprüche 1 bis 3, welche desweiteren 1 bis 3 Gewichtsteile (E) Hexamethylentetramin bezogen auf 100 Gewichtsteile der Kautschukkomponente (A) enthält.

5. Kautschukzusammensetzung zum Beschichten eines Unterbaus und/oder eines Breakers, welcher für einen Notlaufreifen eingesetzt wird, nach einem der Ansprüche 1 bis 4, welche desweiteren 0,5 bis 3 Gewichtsteile (F) eines partiellen Kondensats eines Hexamethylolmelaminpentamethylethers oder eines partiellen Kondensats von Hexamethoxymethylolmelamin bezogen auf 100 Gewichtsteile der Kautschukkomponente (A) enthält.

6. Kautschukzusammensetzung zum Beschichten eines Unterbaus und/oder eines Breakers, welcher für einen Notlaufreifen eingesetzt wird, nach einem der Ansprüche 1 bis 5, wobei die Kautschukkomponente (A) als synthetischen Kautschuk einen modifizierten Butadienkautschuk und einen modifizierten Styrol-Butadien-Kautschuk enthält.

7. Kautschukzusammensetzung zum Beschichten eines Unterbaus und/oder eines Breakers, welcher für einen Notlaufreifen eingesetzt wird, nach einem der Ansprüche 1 bis 6, wobei die Kautschukkomponente (A) 40 bis 80 Gewichtsprozent eines Naturkautschuks und/oder eines Isoprenkautschuks sowie 10 bis 30 Gewichtsprozent eines modifizierten Butadienkautschuks enthält.

8. Kautschukzusammensetzung zum Beschichten eines Unterbaus und/oder eines Breakers, welcher für einen Notlaufreifen eingesetzt wird, nach einem der Ansprüche 1 bis 7, wobei ein Fasercord beschichtet wird und als ein Unterbau und/oder ein Breaker verwendet wird.

**9.** Notlaufreifen, wobei die Kautschukzusammensetzung zum Beschichten eines für einen Notlaufreifen eingesetzten Unterbaus und/oder Breakers nach einem der Ansprüche 1 bis 8 für einen Unterbau und/oder einen Breaker eingesetzt wird.

## Revendications

**1.** Composition de caoutchouc pour couvrir une nappe et/ou une ceinture utilisée pour un pneu roulant à plat, comprenant (B) de 2 à 3,5 parties en masse de soufre,

(C) de 2 à 10 parties en masse d'au moins un composé choisi dans le groupe constitué d'une résine de crésol, d'un condensat de résorcinol et d'un condensat de résorcinol modifié, et
(D) de 4 à 15 parties en masse d'un plastifiant

rapporté à (A) 100 parties en masse d'un constituant de caoutchouc, dans laquelle le constituant de caoutchouc (A) comprend un caoutchouc naturel et/ou un caoutchouc d'isoprène et comprend de plus au moins 2 parmi des caoutchoucs synthétiques choisis dans le groupe constitué d'un caoutchouc de butadiène, d'un caoutchouc de butadiène modifié, d'un caoutchouc de styrène-butadiène et d'un caoutchouc de styrène-butadiène modifié,
dans laquelle le constituant de caoutchouc (A) comprend i) de 10 à 50 % en masse d'un caoutchouc de butadiène modifié ou ii) de 10 à 40 % en masse d'un caoutchouc de styrène-butadiène modifié ou iii) un caoutchouc de butadiène modifié et un caoutchouc de styrène-butadiène modifié comme caoutchouc synthétique.

**2.** Composition de caoutchouc pour couvrir une nappe et/ou une ceinture utilisée pour un pneu roulant à plat selon la revendication 1, dans laquelle le caoutchouc de butadiène modifié peut être obtenu en réalisant une polymérisation de 1,3-butadiène par un initiateur de lithium et en ajoutant ensuite un composé d'étain.

**3.** Composition de caoutchouc pour couvrir une nappe et/ou une ceinture utilisée pour un pneu roulant à plat selon la revendication 1 ou 2, dans laquelle le constituant de caoutchouc (A) comprend ii) de 10 à 40 % en masse d'un caoutchouc de styrène-butadiène modifié ou iii) un caoutchouc de butadiène modifié et un caoutchouc de styrène-butadiène modifié comme caoutchouc synthétique, dans laquelle le caoutchouc de styrène-butadiène modifié présente un groupe amino primaire et un groupe alcoxysilyle.

**4.** Composition de caoutchouc pour couvrir une nappe et/ou une ceinture utilisée pour un pneu roulant à plat selon l'une quelconque des revendications 1 à 3, comprenant de plus de 1 à 3 parties en masse de (E) hexaméthylènetétramine rapporté à 100 parties en masse du constituant de caoutchouc (A).

**5.** Composition de caoutchouc pour couvrir une nappe et/ou une ceinture utilisée pour un pneu roulant à plat selon l'une quelconque des revendications 1 à 4, comprenant de plus de 0,5 à 3 parties en masse de (F) un condensat partiel d'un pentaméthyléther d'hexaméthylolmélamine ou d'un condensat partiel d'hexaméthoxyméthylolmélamine rapporté à 100 parties en masse du constituant de caoutchouc (A).

**6.** Composition de caoutchouc pour couvrir une nappe et/ou une ceinture utilisée pour un pneu roulant à plat selon l'une quelconque des revendications 1 à 5, dans laquelle le constituant de caoutchouc (A) comprend un caoutchouc de butadiène modifié et un caoutchouc de styrène-butadiène modifié comme caoutchouc synthétique.

**7.** Composition de caoutchouc pour couvrir une nappe et/ou une ceinture utilisée pour un pneu roulant à plat selon l'une quelconque des revendications 1 à 6, dans laquelle le constituant de caoutchouc (A) comprend de 40 à 80 % en masse d'un caoutchouc naturel et/ou d'un caoutchouc d'isoprène et de 10 à 30 % en masse d'un caoutchouc de butadiène modifié.

**8.** Composition de caoutchouc pour couvrir une nappe et/ou une ceinture utilisée pour un pneu roulant à plat selon l'une quelconque des revendications 1 à 7, dans laquelle un câble de fibre est revêtu et utilisé comme une nappe et/ou une ceinture.

**9.** Pneu roulant à plat, dans lequel la composition de caoutchouc pour couvrir une nappe et/ou une ceinture utilisée

pour un pneu roulant à plat selon l'une quelconque des revendications 1 à 8 est utilisée pour une nappe et/ou une ceinture.

FIG. 1

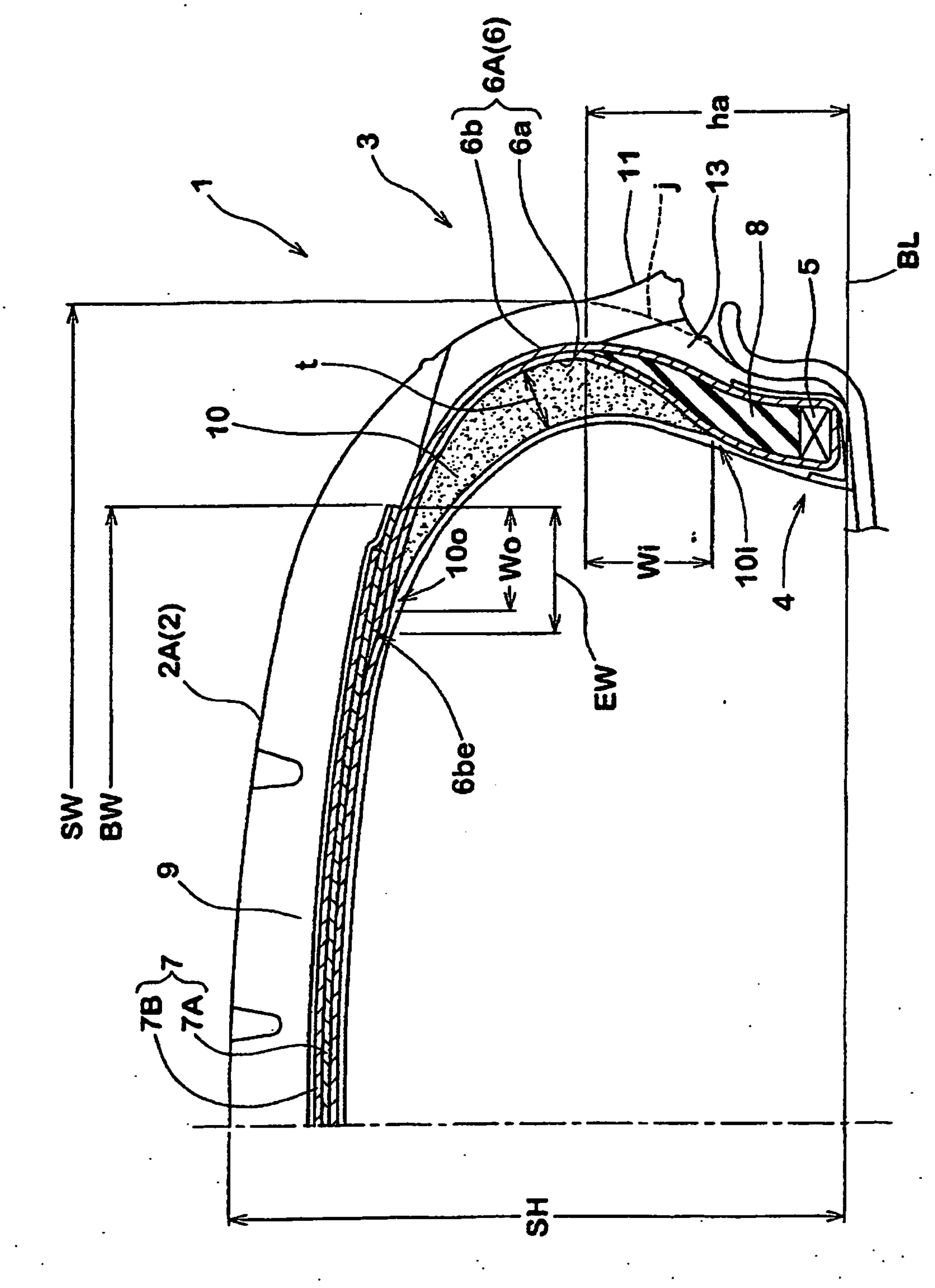
1
3
6b
6a
6A(6)
11
j
13
ha
8
5
BL
t
10
10o
Wo
Wi
10l
4
EW
6be
2A(2)
9
7B
7A
7
SW
BW
SH

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004217817 A
- JP 2006328194 A
- JP 2007069774 A
- JP 2006124602 A
- EP 1852463 A1
- EP 1568735 A
- JP 2994989 B